# EUROPEAN PATENT SPECIFICATION

(11) **EP 4 065 929 B1**
(45) Date of publication and mention of the grant of the patent: **14.10.2026**
(21) Application number: 20896011.2
(22) Date of filing: 25.11.2020
(51) Int. Cl.: G01C 3/08, H04N 9/31, G06T 7/00, G01B 11/02, G01B 11/25, G01S 17/10, G01S 17/48, G01S 17/89

(54) **ENHANCING TRIANGULATION-BASED THREE-DIMENSIONAL DISTANCE MEASUREMENTS WITH TIME OF FLIGHT INFORMATION**
VERBESSERUNG VON TRIANGULATIONSBASIERTEN DREIDIMENSIONALEN ABSTANDSMESSUNGEN MIT FLUGZEITINFORMATIONEN
AMÉLIORATION DE MESURES DE DISTANCE TRIDIMENSIONNELLES BASÉES SUR UNE TRIANGULATION AVEC DES INFORMATIONS DE TEMPS DE VOL

(30) Priority: 01.12.2019 US 201962942137 P
(43) Date of publication of application: 05.10.2022
(73) Proprietor: Magik Eye Inc., New York, New York 10016 (US)
(72) Inventor: KIMURA, Akiteru, Hachioji-shi Tokyo, 192--0046 (JP)
(74) Representative: Marks & Clerk LLP
(86) International application number: PCT/US2020/062138
(87) International publication number: WO 2021/113135

(56) References cited:
- KR-A- 20170 054 221
- US-A1- 2011 037 849
- US-A1- 2014 211 193
- US-A1- 2015 062 558
- US-A1- 2016 041 266
- US-A1- 2016 041 266
- US-A1- 2019 064 359

## Description

### FIELD OF THE INVENTION

The invention related generally to distance measurement, and relates more particularly to enhancing triangulation-based three-dimensional distance measurements with time of flight (TOF) information.

### BACKGROUND

United States Patent Applications Publication Nos. 2016/0117561, 2016/0327385, and 2016/0328854 describe various configurations of distance sensors. Such distance sensors may be useful in a variety of applications, including security, gaming, control of unmanned vehicles, and other applications.

The distance sensors described in these applications include light projecting systems (e.g., comprising lasers, diffractive optical elements, and/or other cooperating components) which project beams of light in a wavelength that is substantially invisible to the human eye (e.g., infrared) into a field of view. The beams of light spread out to create a pattern of points (dots, dashes, or other the like) that can be detected by an appropriate light receiving system (e.g., lens, image capturing device, and/or other components). When the pattern is incident upon an object in the field of view, the distance from the sensor to the object can be calculated based on the appearance of the pattern (e.g., the positional relationships of the points) in one or more images of the field of view, which may be captured by the sensor's light receiving system. The shape and dimensions of the object can also be determined.

For instance, the appearance of the pattern may change with the distance to the object. As an example, if the pattern comprises a pattern of dots, the dots may appear closer to each other when the object is closer to the sensor, and may appear further away from each other when the object is further away from the sensor.

US 2014/0211193 A1 describes structured light and time of flight depth capture with a MEMS ribbon linear array spatial light modulator.

US 2016/0041266 A1 describes a three-dimensional position tracking system.

### SUMMARY

The invention provides a method, non-transitory machine-readable storage medium and apparatus as set out in the accompanying claims.

### BRIEF DESCRIPTION OF THE DRAWINGS

FIG. 1A is an example chart illustrating the relationship between the image position of a point of light on a distance sensor's imaging sensor and object distance;
FIG. 1B is an example chart illustrating the relationship between object distance and distance measurement accuracy for time of flight based distance calculations;
FIG. 2, for instance, illustrates a simplified example of a distance sensor for measuring the distance to an object;
FIG. 3 is a schematic diagram illustrating the relationship between the image position of a point and the object distance when the trajectories overlap, and further illustrating how ranging results obtained via time of flight-based measurement techniques can be obtained simultaneously with ranging results obtained via triangulation-based measurement techniques;
FIG. 4 illustrates an example of the imaging sensor of FIG. 2 in greater detail;
FIG. 5 is a flow diagram illustrating an example method for calculating the distance to an object, according to examples of the present disclosure; and
FIG. 6 depicts a high-level block diagram of an example electronic device for calculating the distance from a sensor to an object.

### DETAILED DESCRIPTION

The present disclosure broadly describes an apparatus, method, and non-transitory computer-readable medium for enhancing triangulation-based three-dimensional distance measurements with time of flight (TOF) information. As discussed above, distance sensors such as those described in United States Patent Applications Publication Nos. 2016/0117561, 2016/0327385, and 2016/0328854 determine the distance to an object (and, potentially, the shape and dimensions of the object) by projecting beams of light that spread out to create a pattern of points (e.g., dots, dashes, or the like) in a field of view that includes the object. The beams of light may be projected from one or more laser light sources which emit light of a wavelength that is substantially invisible to the human eye, but which is visible to an appropriate detector (e.g., of the light receiving system). The three-dimensional distance to the object may then be calculated based on the appearance of the pattern to the detector, using triangulation techniques.

Three-dimensional distance measurement by triangulation has proven to be highly accurate at close range, and is therefore useful for applications such as facial authentication (e.g., authenticating an individual as an authorized user of a device or service based on matching of the individual's facial features to facial features of an authorized user). At longer distances, however, triangulation may be more prone to error due to the difficulty in identifying individual points of light (i.e., identifying correspondences between points of light in the pattern and the beams that created the points, which are necessary for determining the positional relationships of the points of light).

For instance, as discussed above, the image positions (i.e., the positions of the light reflected by the points on an imaging sensor) of the individual points of light in a pattern that is projected into an object may vary based on the distance to the object. As an example, the points of light may appear closer to each other when the object is closer to the sensor, and may appear further away from each other when the object is further away from the sensor. The range of potential image positions for an individual point of light may be referred to as the point of light's "trajectory," and the trajectory tends to be fixed. As the number of points of light in a pattern increases, so does the likelihood that the trajectories of the individual points of light will overlap, making it more difficult to determine which point of light corresponds to which beam projected by the distance sensor. If the beam to which the point of light corresponds cannot be determined, then distance measurement by triangulation becomes more difficult.

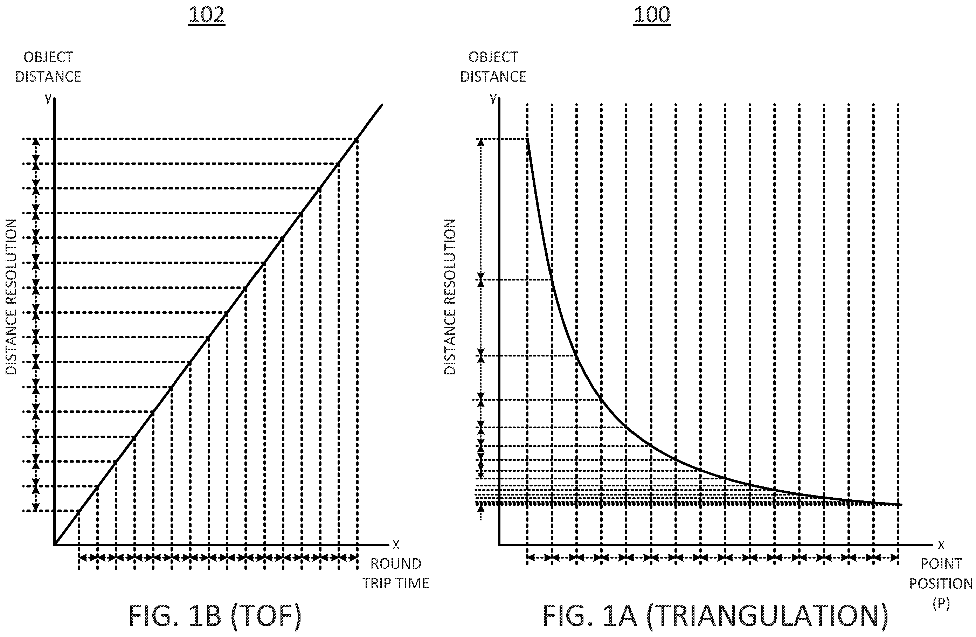

FIG. 1A is an example chart 100 illustrating the relationship between the image position of a point of light on a distance sensor's imaging sensor and object distance (i.e., the distance from the distance sensor to the object whose distance is being measured). In particular, the x axis of the chart 100 plots the positional resolution of the point of light, while the y axis of the chart 100 plots the distance resolution. As discussed above, knowing the relationship between point image position and object distance is key to being able to calculate object distance using triangulation techniques.

As can be seen in FIG. 1A, the trajectory (or range within which the image position of a point may move) decreases as the distance to the object increases. This means that, for triangulation-based distance measurement techniques, distance measurements can be made at high resolution for longer distances, because the amount of movement of the image position is larger in the near range.

FIG. 1B is an example chart 102 illustrating the relationship between object distance and distance measurement accuracy for time of flight based distance calculations. In particular, the x axis of the chart 102 plots the time measurement resolution (i.e., round trip time of flight), while the y axis of the chart 102 plots the distance resolution. As can be seen from FIG. 1B, the ranging resolution (or accuracy) for time of flight-based distance measurement calculations is constant for any object distance.

Thus, when reviewing FIG. 1A and FIG. 1B together, it can be seen that the distance measurement resolution of triangulation-based distance measurement techniques far exceeds the distance measurement resolution of time of flight-based distance measurement techniques, at least up to a certain object distance.

Examples of the present disclosure make use of time of flight (TOF)-based distance measurement techniques to augment triangulation-based three-dimensional distance measurements for improved accuracy. TOF typically works by projecting modulated light onto an object and tracking the time that it takes the projected light to return as reflected light; the distance to the object can be calculated as a function of the time elapsed between emission of the projected light and imaging of the reflected light on a sensor. In this way, distance can be measured at a certain resolution, regardless of distance. Although this resolution is typically too coarse for applications such as facial authentication, which rely on a high level of detail, it can be useful in confirming the results of a triangulation-based measurement.

According to the invention, a distance measurement calculation made using triangulation-based techniques identifies a point of light in a projection pattern that is detected within a region of the projection pattern where two adjacent trajectories overlap. Using triangulation-based distance measurement techniques alone, it may be difficult to determine to which trajectory (and hence, which projected beam) that point of light belongs. However, by augmenting with a distance measurement calculation based on time of flight, it is possible to discern the trajectory to which the point of light belongs.

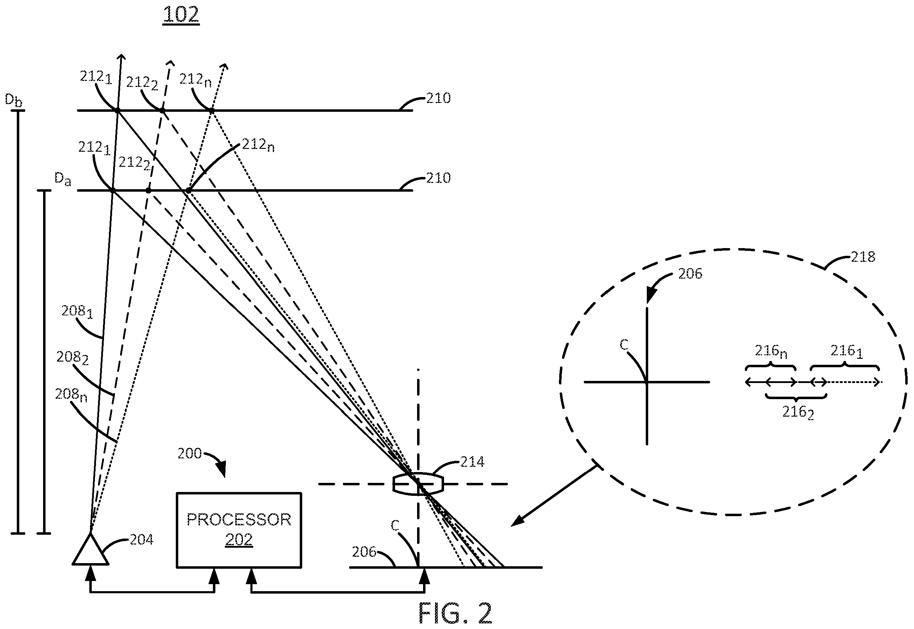

FIG. 2, for instance, illustrates a simplified example of a distance sensor 200 for measuring the distance to an object 210. As illustrated, the distance sensor 200 generally comprises a processor 202, a light projecting system including a plurality of projection points including at least a first projection point 204, and a light receiving system 206 including at least an imaging sensor 206 and a lens 214 of a camera.

The projection point 204 may comprise a plurality of components, including a light source and a diffractive optical element. The light source may comprise a laser light source that is capable of emitting light in a wavelength that is substantially invisible to the human eye (e.g., an infrared wavelength). The light source may emit a single beam of light that is split, by the diffractive optical element, into a plurality of beams of light that fan out from a common central point or origin.

As illustrated, the projection point 204 may project the plurality of beams 208₁-208ₙ of light (hereinafter individually referred to as a "beam 208" or collectively referred to as "beams 208") onto an object 210. When the beams 208 are incident upon the object 210, this creates a plurality of points of light 212₁-212ₙ (hereinafter individually referred to as a "point 212" or collectively referred to as "points 212'), i.e., one point of light per beam 208, on the object 210. The points 212 of light collectively form a predefined pattern (such as a grid) whose dimensions are known.

The distance from the distance sensor 200 to the object 210 may vary. FIG. 2 shows the object 210 at a first distance Dₐ and a second distance D_{b}. As shown, the points 212 of light may be incident upon the object 210 at either distance Dₐ or D_{b}; however, changing the distance will change the appearance of the pattern created by the points 212 of light as discussed above. In particular, the position of a point's reflected image on the imaging sensor 206 will vary as shown.

Inset 218 shows how the trajectories 216₁-216ₙ (hereinafter individually referred to as a "trajectory 216" or collectively referred to as "trajectories 216") corresponding to the points 212₁-212ₙ overlap on the surface of the imaging sensor. The center of the imaging sensor is designated as C for reference. Due to the overlap of the trajectories 216, a given point 212 of light may appear on a location on the imaging sensor 206 that is covered by two adjacent and overlapping trajectories 216, making it difficult to determine, with certainty, to which trajectory 216 (and hence, to which beam 208) the given point 212 belongs.

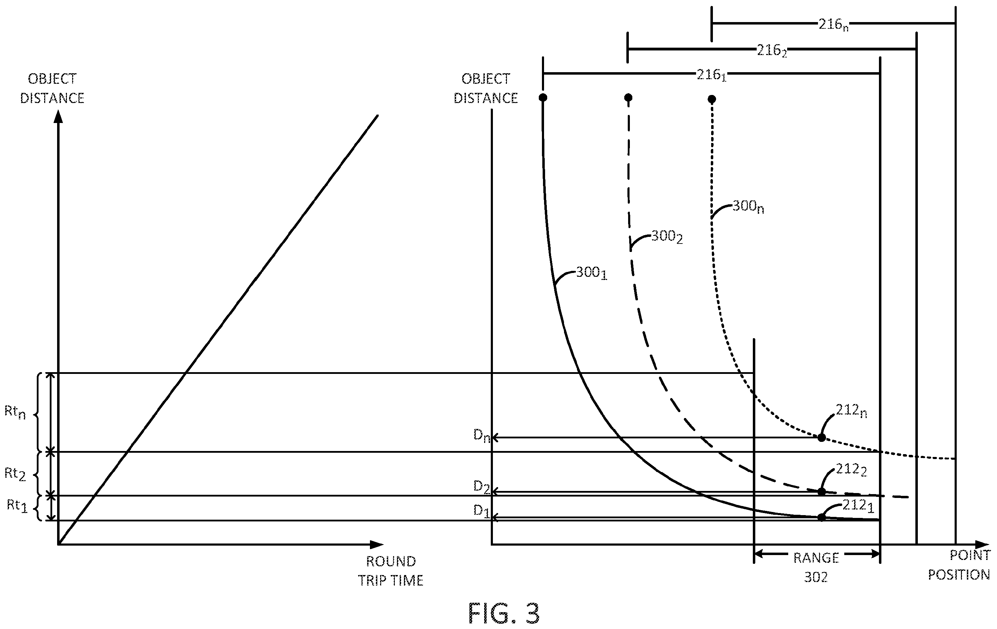

FIG. 3 is a schematic diagram illustrating the relationship between the image position of a point 212 and the object distance D when the trajectories 216 overlap, and further illustrating how ranging results obtained via time of flight-based measurement techniques can be obtained simultaneously with ranging results obtained via triangulation-based measurement techniques.

FIG. 3 shows a plurality of image position-object distance curves similar to that illustrated in FIG. 1A, but for the points 212 of light illustrated in FIG. 2. For instance, curve 300₁ corresponds to point 212₁, curve 300₂ corresponds to point 212₂, and curve 300ₙ corresponds to point 212ₙ. The curves 300₁-300ₙ may be individually referred to as a "curve 300" of collectively referred to as "curves 300." The interval or distance between the curves 300 is determined by the angular interval between the points 212 and corresponds to the range 302.

Rt in FIG. 3 represents the resolution of the time of flight-based measurements. More specifically, Rt indicates that, for the closest image position specified, that when the object (e.g., object 210) is a distance Rt away from the distance sensor, the image position moves by Rt. Thus, Rt₁ indicates the resolution for the point 212₁, Rt₂ indicates the resolution for the point 212₂, and Rtₙ indicates the resolution for the point 212ₙ.

The trajectories 216 of the points 212 overlap as illustrated. Thus, when a given point of light is detected at a position P, the object distance that is calculated will differ depending on whether the given point of light belongs to the trajectory 216₁, 216₂, or 216ₙ. On the other hand, since the object distance calculated using time of flight techniques at position P is already known, this knowledge can help to identify to which trajectory 216 the given point of light belongs. Furthermore, since the resolution of the time of flight-based measurements is Rt, the object distances for the points 212 can be reliably determined with the resolution of the time of flight.

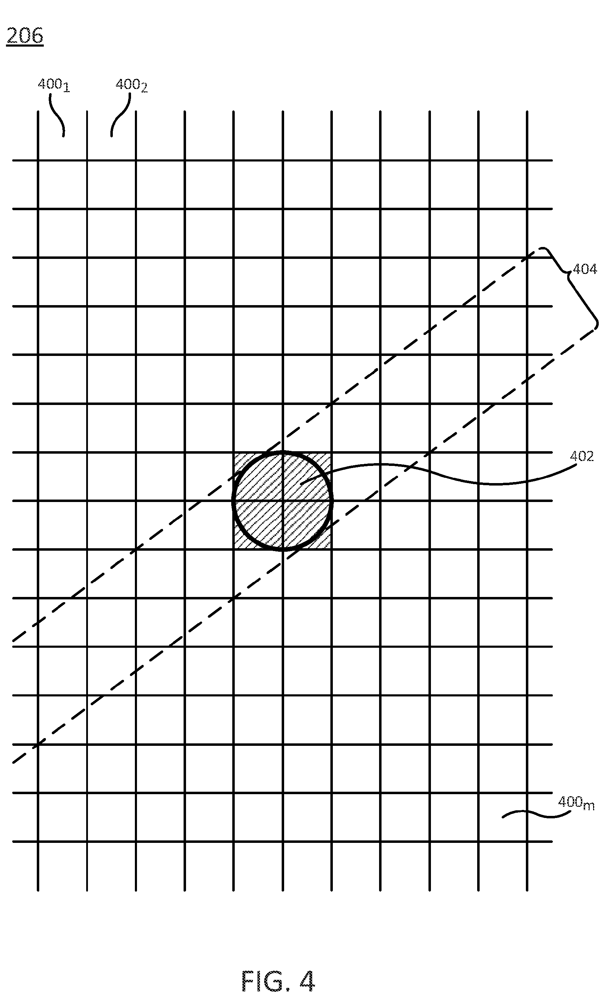

FIG. 4 illustrates an example of the imaging sensor 206 of FIG. 2 in greater detail. More particularly, FIG. 4 shows the relationship between image position and time of flight detection position on the imaging sensor 206. As illustrated, the imaging sensor 206 comprises a plurality of pixels 400₁-400ₘ (hereinafter individually referred to as a "pixel 400" or collectively as "pixels 400") arranged in a grid or matrix. Each pixel 400 may include, for example, a photodetector, and may further include a lens (e.g., a microlens) to focus reflected light onto the photodetector and a filter to allow specific wavelengths of light to pass through to the photodetector.

As illustrated, a point of light 402 may be imaged onto the imaging sensor 206. The position of the point of light 402 (as determined by a triangulation-based measurement technique) may overlap one or more of the pixels 400 of the imaging sensor 206. In FIG. 4, the shaded pixels 400 represent the time of flight detection position of the point 402, while the circular outline represents the image position of the point 402 as detected using triangulation-based measurement techniques. A trajectory 404 to which the point 402 belongs is also illustrated. In one example, the point 402 belonging to the trajectory 404 may be imaged anywhere on the imaging sensor 206 falling within the trajectory 404, depending upon the distance from the distance sensor to the object.

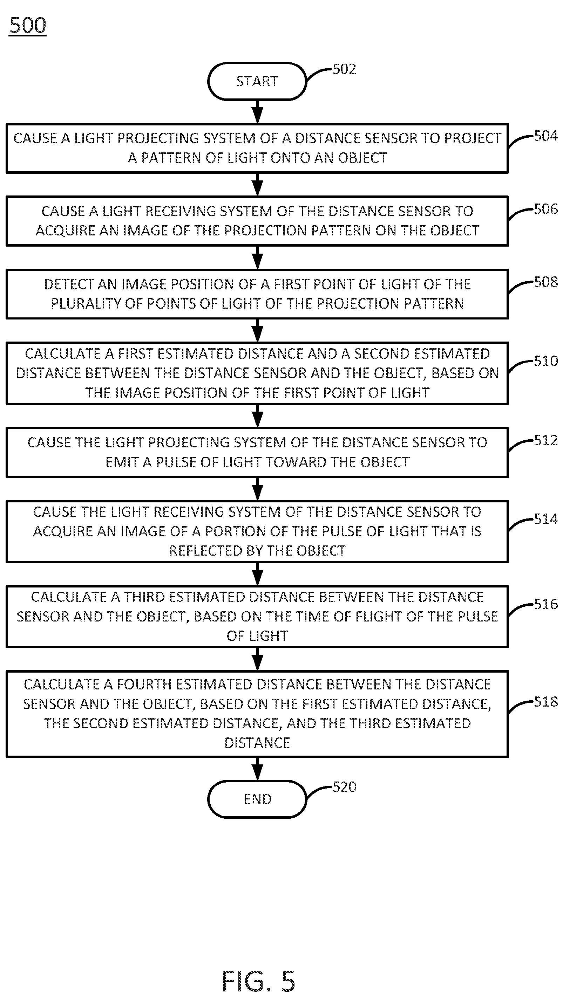

FIG. 5 is a flow diagram illustrating an example method 500 for calculating the distance to an object, according to examples of the present disclosure. The method 500 may be performed, for example, by a processing system including at least one processor, such as the processing system of a distance sensor. For the sake of example, the method 500 is described as being performed by a processing system.

The method 500 may begin in step 502. In step 504, the processing system causes a light projecting system of a distance sensor to project a pattern of light onto an object, wherein the pattern of light comprises a plurality of points of light that collectively form the pattern. For instance, the processing system may send an electronic signal to the light projecting system, where the electronic signal encodes an instruction. As discussed above, the light may be of a wavelength that is substantially invisible to the human eye, but that is detectable by an imaging sensor of the distance sensor (e.g., infrared light).

The pattern of light may be created by a plurality of beams projected by the distance sensor's light projecting system. The plurality of beams may project the plurality of points of light onto the object, where the plurality of points of light collectively forms the pattern of light, or a "projection pattern." In one example, the plurality of points of light may be arranged into a grid pattern comprising a plurality of rows and a plurality of columns.

In a further example, the arrangement of rows and columns may be staggered. For instance the rows may be arranged so that the points of light of every other row are aligned or collinear along imaginary lines that pass through the centers of the points of light in the y or vertical direction. Conversely the points of light in any two immediately adjacent rows will not be aligned (e.g., there will not be an imaginary line in the y or vertical direction that passes through the centers of the points of light of both rows).

Similarly, the columns may be arranged so that the points of light of every other column are aligned or collinear along imaginary lines that pass through the centers of the points of light in the x or horizontal direction. Conversely the points of light of any two immediately adjacent columns will not be aligned (e.g., there will not be an imaginary line in the x or horizontal direction that passes through the centers of the points of light of both columns).

In step 506, the processing system causes a light receiving system of the distance sensor to acquire an image of the projection pattern on the object. For instance, the processing system may send an electronic signal to the light receiving system, where the electronic signal encodes an instruction. As discussed above, although the projection pattern (e.g., the light forming the projection pattern) may be invisible to the human eye, it may be visible to an image sensor of the light receiving system.

In step 508, the processing system detects an image position of a first point of light of the plurality of points of light on an imaging sensor of the light receiving system. Detecting the image position of the first point of light may include determining a first beam projected by a projection point of the light projecting system (where the first beam is one of a plurality of beams projected from the projection point) that corresponds to (i.e., produced) the first point of light.

In one example, detecting the image position of the first point of light may include determining that the image position of first point of light is located in a region of the imaging sensor where a first trajectory and a second trajectory overlap. Thus, it may be unclear from the image acquired in step 206 to which trajectory (and hence, which beam of the plurality of beams) the first point of light belongs.

For example, consider a point of light at position P that falls within the area where the trajectories 216₁, 216₂, and 216ₙ overlap in FIG. 2. The point P could potentially be identified as a point P₁ on trajectory 216₁, a point P₂ on trajectory 216₂, or a point Pₙ on trajectory 216ₙ. The calculated object distance will be different depending on which point P₁, P₂, or Pₙ is determined to be the point P (i.e., the object distance will be D₁ for the point P₁, D₂ for the point P₂, and Dₙ for the point Pₙ).

In step 510, the processing system calculates a first estimated distance and a second estimated distance between the distance sensor and the object, based on the image position of the first point of light. For instance, the processing system may use a triangulation technique to calculate the first estimated distance and the second estimated distance. As an example, the distance may be calculated in any of the manners discussed in United States Patent Applications Publication Nos. 2016/0117561, 2016/0327385, and 2016/0328854.

According to the invention, the first estimated distance is calculated based on the assumption that the first trajectory corresponds to the first point of light, while the second estimated distance is calculated based on the assumption that the second trajectory corresponds to the second point of light. Thus, a triangulation-based distance measurement is calculated for each trajectory that overlaps the location of the first point of light on the imaging sensor. For instance, following the example above for the point P, depending on which of the trajectories is identified as corresponding to the point P, the first estimated distance may be calculated as D₁, D₂, or D₃.

In step 512, the processing system causes the light projecting system of the distance sensor to emit a pulse of light toward the object. For instance, the processing system may send an electronic signal to the light projecting system, where the electronic signal encodes an instruction. As discussed above, the light may be of a wavelength that is substantially invisible to the human eye, but that is detectable by the imaging sensor of the distance sensor (e.g., infrared light). In one example, step 512 is performed simultaneously with step 504.

In step 514, the processing system causes the light receiving system of the distance sensor to acquire an image of a portion of the pulse of light that is reflected by the object. For instance, the processing system may send an electronic signal to the light receiving system, where the electronic signal encodes an instruction. As discussed above, although the pulse of light (and the portion of the pulse of light that is reflected) may be invisible to the human eye, it may be visible to the image sensor of the light receiving system. In one example, step 514 is performed simultaneously with step 506.

In step 516, the processing system calculates a third estimated distance between the distance sensor and the object, based on the time of flight of the pulse of light. For instance, the processing system may calculate the third estimated distance based on the time elapsed between the time when the light projecting system emits the pulse of light and the time when the imaging sensor of the light receiving system detects the portion of the pulse of light that is reflected by the object. For instance, for a point of light at position P on the imaging sensor, the second estimated distance may be calculated as Dt(P).

In step 518, the processing system calculates a fourth estimated distance between the distance sensor and the object, based on the first estimated distance, the second estimated distance, and the third estimated distance. In particular, the third estimated distance, which was calculated using a time of flight-based distance measurement technique, is used to determine which of the first estimated distance and the second estimated distance is correct (i.e., is closer to the third estimated distance). For instance, referring back to FIG. 4, if the point 402 represents the first point of light, then the distance measurement for the pixels 400 surrounding the point 402 may be adopted as the distance measurement for the point 402. Whichever of the first estimated distance and the second estimated distance is determined to be correct based on the third estimated distance is output or stored as the distance from the distance sensor to the object.

The method 500 may end in step 520.

It should be noted that although not explicitly specified, some of the blocks, functions, or operations of the method 500 described above may include storing, displaying and/or outputting for a particular application. In other words, any data, records, fields, and/or intermediate results discussed in the method 500 can be stored, displayed, and/or outputted to another device depending on the particular application. Furthermore, blocks, functions, or operations in FIG. 5 that recite a determining operation, or involve a decision, do not imply that both branches of the determining operation are practiced. In other words, one of the branches of the determining operation may not be performed, depending on the results of the determining operation.

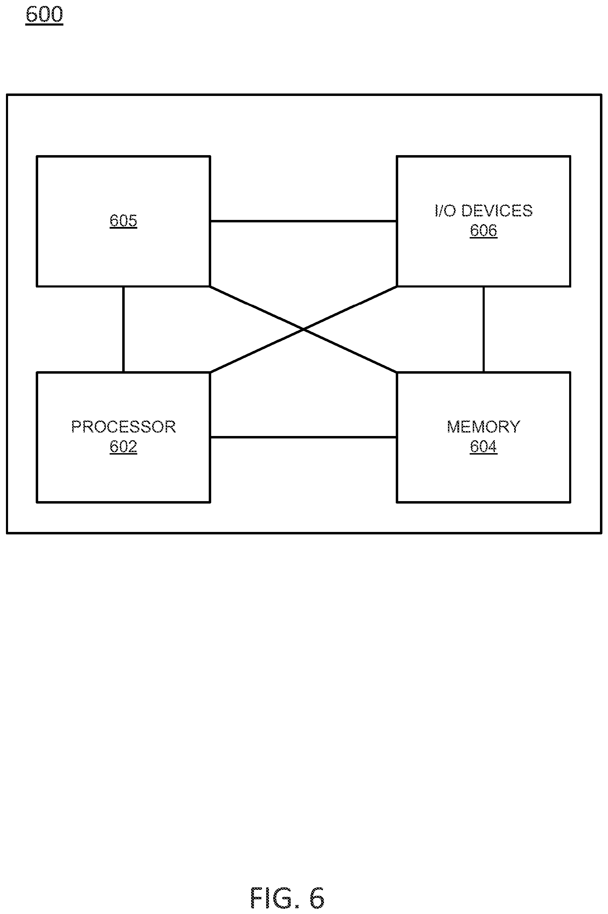

FIG. 6 depicts a high-level block diagram of an example electronic device 600 for calculating the distance from a sensor to an object. As such, the electronic device 600 may be implemented as a processor of an electronic device or system, such as a distance sensor.

As depicted in FIG. 6, the electronic device 600 comprises a hardware processor element 602, e.g., a central processing unit (CPU), a microprocessor, or a multi-core processor, a memory 604, e.g., random access memory (RAM) and/or read only memory (ROM), a module 605 for calculating the distance from a sensor to an object, and various input/output devices 606, e.g., storage devices, including but not limited to, a tape drive, a floppy drive, a hard disk drive or a compact disk drive, a receiver, a transmitter, a display, an output port, an input port, and a user input device, such as a keyboard, a keypad, a mouse, a microphone, a camera, a laser light source, an **LED** light source, and the like.

Although one processor element is shown, it should be noted that the electronic device 600 may employ a plurality of processor elements. Furthermore, although one electronic device 600 is shown in the figure, if the method(s) as discussed above is implemented in a distributed or parallel manner for a particular illustrative example, i.e., the blocks of the above method(s) or the entire method(s) are implemented across multiple or parallel electronic devices, then the electronic device 600 of this figure is intended to represent each of those multiple electronic devices.

**It** should be noted that the present disclosure can be implemented by machine readable instructions and/or in a combination of machine readable instructions and hardware, e.g., using application specific integrated circuits (ASIC), a programmable logic array (PLA), including a field-programmable gate array (FPGA), or a state machine deployed on a hardware device, a general purpose computer or any other hardware equivalents, e.g., computer readable instructions pertaining to the method(s) discussed above can be used to configure a hardware processor to perform the blocks, functions and/or operations of the above disclosed method(s).

**In** one example, instructions and data for the present module or process 605 for calculating the distance from a sensor to an object, e.g., machine readable instructions can be loaded into memory 604 and executed by hardware processor element 602 to implement the blocks, functions or operations as discussed above in connection with the method 500. Furthermore, when a hardware processor executes instructions to perform "operations", this could include the hardware processor performing the operations directly and/or facilitating, directing, or cooperating with another hardware device or component, e.g., a co-processor and the like, to perform the operations.

The processor executing the machine readable instructions relating to the above described method(s) can be perceived as a programmed processor or a specialized processor. As such, the present module 605 for calculating the distance from a sensor to an object of the present disclosure can be stored on a tangible or physical (broadly non-transitory) computer-readable storage device or medium, e.g., volatile memory, non-volatile memory, ROM memory, RAM memory, magnetic or optical drive, device or diskette and the like. More specifically, the computer-readable storage device may comprise any physical devices that provide the ability to store information such as data and/or instructions to be accessed by a processor or an electronic device such as a computer or a controller of a safety sensor system.

It will be appreciated that variants of the above-disclosed and other features and functions, or alternatives thereof, may be combined into many other different systems or applications.

## Claims

1. A method, comprising:
causing (504), by a processing system (202) of a distance sensor (200), a light projecting system (204) of the distance sensor to project a pattern of light onto an object (210), wherein the pattern of light comprises a plurality of points of light (212) that collectively form the pattern;
causing (506), by the processing system (202), a light receiving system of the distance sensor (200) to acquire an image of the pattern of light projected onto the object (210);
detecting (508), by the processing system (202), an image position of a first point of light of the plurality of points of light (212) on an imaging sensor (206) of the light receiving system;
calculating (510), by the processing system (202), a first estimated distance between the distance sensor (200) and the object (210) and a second estimated distance between the distance sensor (200) and the object (210) wherein the calculating (510) comprises:
identifying, by the processing system (202), a first trajectory (216) and a second trajectory (216) that overlap in a location of the image position, wherein the first trajectory (216) comprises a first range of potential range of image positions of a point of light of the plurality of points of light (212) belonging to the first trajectory (216), and the second trajectory (216) comprises a second range of potential image positions of a point of light of the plurality of points of light (212) belonging to the second trajectory (216);
calculating, by the processing system (202), the first estimated distance based on an assumption that the first point of light belongs to the first trajectory (216); and
calculating, by the processing system (202), the second estimated distance based on an assumption that the first point of light belongs to the second trajectory (216);
causing (512), by the processing system (202), the light projecting system (204) of the distance sensor (200) to emit a pulse of light toward the object (210);
causing (514), by the processing system (202), the light receiving system to acquire an image of a portion of the pulse of light that is reflected by the object (210);
calculating (516), by the processing system (202), a third estimated distance between the distance sensor (200) and the object (210), based on a time of flight of the pulse of light; and
calculating (518), by the processing system, a fourth estimated distance between the distance sensor (200) and the object (210), based on the first estimated distance, the second estimated distance, and the third estimated distance, wherein the calculating the fourth estimated distance comprises selecting one of the first estimated distance or the second estimated distance that is closer to the third estimated distance as the fourth estimated distance.

2. The method of claim 1, wherein the first estimated distance and the second estimated distance are calculated using triangulation.

3. The method of any preceding claim, wherein the causing (504) the light projecting system to project the pattern of light is performed simultaneously with the causing (512) the light projecting system to emit the pulse of light.

4. The method of any preceding claim, wherein the causing (506) the light receiving system to acquire the image of the projection pattern is performed simultaneously with the causing (514) the light receiving system to acquire the image of the portion of the pulse of light.

5. The method of any preceding claim, wherein the plurality of points of light and the pulse of light comprise light of a wavelength that is invisible to a human eye.

6. The method of any preceding claim, wherein the plurality of points of light and the pulse of light comprise infrared light.

7. The method of any preceding claim, wherein the pattern of light comprises a predefined pattern having known dimensions.

8. A non-transitory machine-readable storage medium (606) encoded with instructions (605) executable by the processing system (202) including at least one processor (602), wherein, when executed by the processing system (202), the instructions (605) cause the processing system (202) to perform operations (200), the operations (200) comprising:
causing (504) a light projecting system (204) of a distance sensor (200) to project a pattern of light onto an object (210), wherein the pattern of light comprises a plurality of points of light (212) that collectively form the pattern;
causing (506) a light receiving system of the distance sensor (200) to acquire an image of the pattern of light projected onto the object (210);
detecting (508) an image position of a first point of light of the plurality of points of light (212) on an imaging sensor (206) of the light receiving system;
calculating (510) a first estimated distance between the distance sensor (200) and the object (21) and a second estimated distance between the distance sensor (200) and the object (210) wherein the calculating (510) comprises:
identifying a first trajectory (216) and a second trajectory (216) that overlap in a location of the image position, wherein the first trajectory (216) comprises a first range of potential range of image positions of a point of light of the plurality of points of light (212) belonging to the first trajectory (216), and the second trajectory (216) comprises a second range of potential image positions of a point of light of the plurality of points of light (212) belonging to the second trajectory (216);
calculating the first estimated distance based on an assumption that the first point of light belongs to the first trajectory (216); and
calculating the second estimated distance based on an assumption that the first point of light belongs to the second trajectory (216);
causing (512) the light projecting system (202) of the distance sensor (200) to emit a pulse of light toward the object (210);
causing (514) the light receiving system to acquire an image of a portion of the pulse of light that is reflected by the object (210);
calculating (516) a third estimated distance between the distance sensor (200) and the object (210), based on a time of flight of the pulse of light; and
calculating (518) a fourth estimated distance between the distance sensor (200) and the object (210), based on the first estimated distance, the second estimated distance, and the third estimated distance, wherein the calculating the fourth estimated distance comprises selecting one of the first estimated distance or the second estimated distance that is closer to the third estimated distance as the fourth estimated distance.

9. The non-transitory machine-readable storage medium of claim 8, which is further encoded with instructions (605) for performing the method of any of claims 2 to 7.

10. An apparatus (600), comprising:
a processing system (602); and
a non-transitory machine-readable storage medium (606) encoded with instructions (605) executable by the processing system (602), wherein, when executed, the instructions (605) cause the processing system (602) to perform operations (200), the operations (200) comprising:
causing (504) a light projecting system (204) of a distance sensor (200) to project a pattern of light onto an object (210), wherein the pattern of light comprises a plurality of points of light (212) that collectively form the pattern;
causing (506) a light receiving system of the distance sensor (200) to acquire an image of the pattern of light projected onto the object (210);
detecting (508) an image position of a first point of light of the plurality of points of light (212) on an imaging sensor (206) of the light receiving system;
calculating (510) a first estimated distance between the distance sensor (200) and the object (21) and a second estimated distance between the distance sensor (200) and the object (210) wherein the calculating (510) comprises:
identifying a first trajectory (216) and a second trajectory (216) that overlap in a location of the image position, wherein the first trajectory (216) comprises a first range of potential range of image positions of a point of light of the plurality of points of light (212) belonging to the first trajectory (216), and the second trajectory (216) comprises a second range of potential image positions of a point of light of the plurality of points of light (212) belonging to the second trajectory (216);
calculating the first estimated distance based on an assumption that the first point of light belongs to the first trajectory (216); and
calculating the second estimated distance based on an assumption that the first point of light belongs to the second trajectory (216);
causing (512) the light projecting system (202) of the distance sensor (200) to emit a pulse of light toward the object (210);
causing (514) the light receiving system to acquire an image of a portion of the pulse of light that is reflected by the object (210);
calculating (516) a third estimated distance between the distance sensor (200) and the object (210), based on a time of flight of the pulse of light; and
calculating (518) a fourth estimated distance between the distance sensor (200) and the object (210), based on the first estimated distance, the second estimated distance, and the third estimated distance, wherein the calculating the fourth estimated distance comprises selecting one of the first estimated distance or the second estimated distance that is closer to the third estimated distance as the fourth estimated distance.

## Patentansprüche

1. Verfahren, umfassend:
Veranlassen (504), durch ein Verarbeitungssystem (202) eines Entfernungssensors (200), dass ein Lichtprojektionssystem (204) des Entfernungssensors ein Lichtmuster auf ein Objekt (210) projiziert, wobei das Lichtmuster eine Vielzahl von Lichtpunkten (212) umfasst, die gemeinsam das Muster bilden;
Veranlassen (506), durch das Verarbeitungssystem (202), dass ein Lichtempfangssystem des Entfernungssensors (200) ein Bild des auf das Objekt (210) projizierten Lichtmusters aufnimmt; und
Erfassen (508), durch das Verarbeitungssystem (202), einer Bildposition eines ersten Lichtpunkts aus der Vielzahl von Lichtpunkten (212) auf einem Bildsensor (206) des Lichtempfangssystems;
Berechnen (510), durch das Verarbeitungssystem (202), einer ersten geschätzten Entfernung zwischen dem Entfernungssensor (200) und dem Objekt (210) und einer zweiten geschätzten Entfernung zwischen dem Entfernungssensor (200) und dem Objekt (210), wobei das Berechnen (510) Folgendes umfasst:
Identifizieren, durch das Verarbeitungssystem (202), einer ersten Trajektorie (216) und einer zweiten Trajektorie (216), die sich an einer Stelle der Bildposition überlappen, wobei die erste Trajektorie (216) einen ersten Bereich potenzieller Bereiche von Bildpositionen eines Lichtpunkts aus der Vielzahl von Lichtpunkten (212) umfasst, die zur ersten Trajektorie (216) gehören, und die zweite Trajektorie (216) einen zweiten Bereich potenzieller Bildpositionen eines Lichtpunkts aus der Vielzahl von Lichtpunkten (212) umfasst, die zur zweiten Trajektorie (216) gehören;
Berechnen, durch das Verarbeitungssystem (202), der ersten geschätzten Entfernung auf Basis einer Annahme, dass der erste Lichtpunkt zur ersten Trajektorie (216) gehört; und
Berechnen, durch das Verarbeitungssystem (202), der zweiten geschätzten Entfernung auf Basis einer Annahme, dass der erste Lichtpunkt zur zweiten Trajektorie (216) gehört;
Veranlassen (512), durch das Verarbeitungssystem (202), dass das Lichtprojektionssystem (204) des Entfernungssensors (200) einen Lichtimpuls in Richtung des Objekts (210) aussendet;
Veranlassen (514), durch das Verarbeitungssystem (202), dass das Lichtempfangssystem ein Bild eines Teils des Lichtimpulses aufnimmt, der vom Objekt (210) reflektiert wird;
Berechnen (516), durch das Verarbeitungssystem (202), einer dritten geschätzten Entfernung zwischen dem Entfernungssensor (200) und dem Objekt (210) auf Basis einer Laufzeit des Lichtimpulses; und
Berechnen (518), durch das Verarbeitungssystem, einer vierten geschätzten Entfernung zwischen dem Entfernungssensor (200) und dem Objekt (210), auf Basis der ersten geschätzten Entfernung, der zweiten geschätzten Entfernung und der dritten geschätzten Entfernung, wobei das Berechnen der vierten geschätzten Entfernung Auswählen jener der ersten geschätzten Entfernung oder der zweiten geschätzten Entfernung, die näher an der dritten geschätzten Entfernung liegt, als die vierte geschätzte Entfernung umfasst.

2. Verfahren nach Anspruch 1, wobei die erste geschätzte Entfernung und die zweite geschätzte Entfernung mittels Triangulation berechnet werden.

3. Verfahren nach einem vorstehenden Anspruch, wobei das Veranlassen (504), dass das Lichtprojektionssystem das Lichtmusters projiziert, gleichzeitig mit dem Veranlassen (512), dass das Lichtprojektionssystem den Lichtimpuls aussendet, durchgeführt wird.

4. Verfahren nach einem vorstehenden Anspruch, wobei das Veranlassen (506), dass das Lichtempfangssystem das Bild des Projektionsmusters aufnimmt, gleichzeitig mit dem Veranlassen (514), dass das Lichtempfangssystem das Bild des Teils des Lichtimpulses aufnimmt, durchgeführt wird.

5. Verfahren nach einem vorstehenden Anspruch, wobei die Vielzahl von Lichtpunkten und der Lichtimpuls Licht einer für das menschliche Auge unsichtbaren Wellenlänge umfassen.

6. Verfahren nach einem vorstehenden Anspruch, wobei die Vielzahl von Lichtpunkten und der Lichtimpuls Infrarotlicht umfassen.

7. Verfahren nach einem vorstehenden Anspruch, wobei das Lichtmuster ein vordefiniertes Muster umfasst, das bekannte Abmessungen aufweist.

8. Nichtflüchtiges, maschinenlesbares Speichermedium (606), das mit Anweisungen (605) codiert ist, die von dem Verarbeitungssystem (202), das zumindest einen Prozessor (602) beinhaltet, ausführbar sind, wobei die Anweisungen (605), wenn sie von dem Verarbeitungssystem (202) ausgeführt werden, das Verarbeitungssystem (202) veranlassen, Operationen (200) durchzuführen, wobei die Operationen (200) umfassen:
Veranlassen (504), dass ein Lichtprojektionssystem (204) eines Entfernungssensors (200) ein Lichtmuster auf ein Objekt (210) projiziert, wobei das Lichtmuster eine Vielzahl von Lichtpunkten (212) umfasst, die gemeinsam das Muster bilden;
Veranlassen (506), dass ein Lichtempfangssystem des Entfernungssensors (200) ein Bild des auf das Objekt (210) projizierten Lichtmusters aufnimmt; und
Erfassen (508) einer Bildposition eines ersten Lichtpunkts aus der Vielzahl von Lichtpunkten (212) auf einem Bildsensor (206) des Lichtempfangssystems;
Berechnen (510) einer ersten geschätzten Entfernung zwischen dem Entfernungssensor (200) und dem Objekt (21) und einer zweiten geschätzten Entfernung zwischen dem Entfernungssensor (200) und dem Objekt (210), wobei das Berechnen (510) Folgendes umfasst:
Identifizieren einer ersten Trajektorie (216) und einer zweiten Trajektorie (216), die sich an einer Stelle der Bildposition überlappen, wobei die erste Trajektorie (216) einen ersten Bereich potenzieller Bereiche von Bildpositionen eines Lichtpunkts aus der Vielzahl von Lichtpunkten (212) umfasst, die zur ersten Trajektorie (216) gehören, und die zweite Trajektorie (216) einen zweiten Bereich potenzieller Bildpositionen eines Lichtpunkts aus der Vielzahl von Lichtpunkten (212) umfasst, die zur zweiten Trajektorie (216) gehören;
Berechnen der ersten geschätzten Entfernung auf Basis einer Annahme, dass der erste Lichtpunkt zur ersten Trajektorie (216) gehört; und
Berechnen der zweiten geschätzten Entfernung auf Basis einer Annahme, dass der erste Lichtpunkt zur zweiten Trajektorie (216) gehört;
Veranlassen (512), dass das Lichtprojektionssystem (202) des Entfernungssensors (200) einen Lichtimpuls in Richtung des Objekts (210) aussendet;
Veranlassen (514), dass das Lichtempfangssystem ein Bild eines Teils des Lichtimpulses aufnimmt, der vom Objekt (210) reflektiert wird;
Berechnen (516), einer dritten geschätzten Entfernung zwischen dem Entfernungssensor (200) und dem Objekt (210) auf Basis einer Laufzeit des Lichtimpulses; und
Berechnen (518) einer vierten geschätzten Entfernung zwischen dem Entfernungssensor (200) und dem Objekt (210), auf Basis der ersten geschätzten Entfernung, der zweiten geschätzten Entfernung und der dritten geschätzten Entfernung, wobei das Berechnen der vierten geschätzten Entfernung Auswählen jener der ersten geschätzten Entfernung oder der zweiten geschätzten Entfernung, die näher an der dritten geschätzten Entfernung liegt, als die vierte geschätzte Entfernung umfasst.

9. Nichtflüchtiges maschinenlesbares Speichermedium nach Anspruch 8, das ferner mit Anweisungen (605) zum Durchführen des Verfahrens nach einem der Ansprüche 2 bis 7 codiert ist.

10. Einrichtung (600), umfassend:
ein Verarbeitungssystem (602); und
ein nichtflüchtiges, maschinenlesbares Speichermedium (606), das mit Anweisungen (605) codiert ist, die von dem Verarbeitungssystem (602) ausführbar sind, wobei die Anweisungen (605), wenn sie ausgeführt werden, das Verarbeitungssystem (602) veranlassen, Operationen (200) durchzuführen, wobei die Operationen (200) Folgendes umfassen:
Veranlassen (504), dass ein Lichtprojektionssystem (204) eines Entfernungssensors (200) ein Lichtmuster auf ein Objekt (210) projiziert, wobei das Lichtmuster eine Vielzahl von Lichtpunkten (212) umfasst, die gemeinsam das Muster bilden;
Veranlassen (506), dass ein Lichtempfangssystem des Entfernungssensors (200) ein Bild des auf das Objekt (210) projizierten Lichtmusters aufnimmt; und
Erfassen (508) einer Bildposition eines ersten Lichtpunkts aus der Vielzahl von Lichtpunkten (212) auf einem Bildsensor (206) des Lichtempfangssystems;
Berechnen (510) einer ersten geschätzten Entfernung zwischen dem Entfernungssensor (200) und dem Objekt (21) und einer zweiten geschätzten Entfernung zwischen dem Entfernungssensor (200) und dem Objekt (210), wobei das Berechnen (510) Folgendes umfasst:
Identifizieren einer ersten Trajektorie (216) und einer zweiten Trajektorie (216), die sich an einer Stelle der Bildposition überlappen, wobei die erste Trajektorie (216) einen ersten Bereich potenzieller Bereiche von Bildpositionen eines Lichtpunkts aus der Vielzahl von Lichtpunkten (212) umfasst, die zur ersten Trajektorie (216) gehören, und die zweite Trajektorie (216) einen zweiten Bereich potenzieller Bildpositionen eines Lichtpunkts aus der Vielzahl von Lichtpunkten (212) umfasst, die zur zweiten Trajektorie (216) gehören;
Berechnen der ersten geschätzten Entfernung auf Basis einer Annahme, dass der erste Lichtpunkt zur ersten Trajektorie (216) gehört; und
Berechnen der zweiten geschätzten Entfernung auf Basis einer Annahme, dass der erste Lichtpunkt zur zweiten Trajektorie (216) gehört;
Veranlassen (512), dass das Lichtprojektionssystem (202) des Entfernungssensors (200) einen Lichtimpuls in Richtung des Objekts (210) aussendet;
Veranlassen (514), dass das Lichtempfangssystem ein Bild eines Teils des Lichtimpulses aufnimmt, der vom Objekt (210) reflektiert wird;
Berechnen (516), einer dritten geschätzten Entfernung zwischen dem Entfernungssensor (200) und dem Objekt (210) auf Basis einer Laufzeit des Lichtimpulses; und
Berechnen (518) einer vierten geschätzten Entfernung zwischen dem Entfernungssensor (200) und dem Objekt (210), auf Basis der ersten geschätzten Entfernung, der zweiten geschätzten Entfernung und der dritten geschätzten Entfernung, wobei das Berechnen der vierten geschätzten Entfernung Auswählen jener der ersten geschätzten Entfernung oder der zweiten geschätzten Entfernung, die näher an der dritten geschätzten Entfernung liegt, als die vierte geschätzte Entfernung umfasst.

## Revendications

1. Procédé, comprenant :
le fait d'amener (504), par un système de traitement (202) d'un capteur de distance (200), un système de projection de lumière (204) du capteur de distance à projeter un motif lumineux sur un objet (210), dans lequel le motif lumineux comprend une pluralité de points lumineux (212) qui forment collectivement le motif ;
le fait d'amener (506), par le système de traitement (202), un système de réception de lumière du capteur de distance (200) à acquérir une image du motif lumineux projeté sur l'objet (210) ;
la détection (508), par le système de traitement (202), d'une position d'image d'un premier point lumineux de la pluralité de points lumineux (212) sur un capteur d'imagerie (206) du système de réception de lumière ;
le calcul (510), par le système de traitement (202), d'une première distance estimée entre le capteur de distance (200) et l'objet (210) et d'une deuxième distance estimée entre le capteur de distance (200) et l'objet (210), dans lequel le calcul (510) comprend :
l'identification, par le système de traitement (202), d'une première trajectoire (216) et d'une seconde trajectoire (216) qui se chevauchent dans un emplacement de la position d'image, dans lequel la première trajectoire (216) comprend une première plage de plage potentielle de positions d'image d'un point lumineux de la pluralité de points lumineux (212) appartenant à la première trajectoire (216), et la seconde trajectoire (216) comprend une seconde plage de positions d'image potentielles d'un point lumineux de la pluralité de points lumineux (212) appartenant à la seconde trajectoire (216) ;
le calcul, par le système de traitement (202), de la première distance estimée sur la base d'une hypothèse selon laquelle le premier point lumineux appartient à la première trajectoire (216) ; et
le calcul, par le système de traitement (202), de la deuxième distance estimée sur la base d'une hypothèse selon laquelle le premier point lumineux appartient à la seconde trajectoire (216) ;
le fait d'amener (512), par le système de traitement (202), le système de projection de lumière (204) du capteur de distance (200) à émettre une impulsion lumineuse vers l'objet (210) ;
le fait d'amener (514), par le système de traitement (202), le système de réception de lumière à acquérir une image d'une portion de l'impulsion lumineuse qui est réfléchie par l'objet (210) ;
le calcul (516), par le système de traitement (202), d'une troisième distance estimée entre le capteur de distance (200) et l'objet (210), sur la base d'un temps de vol de l'impulsion lumineuse ; et
le calcul (518), par le système de traitement, d'une quatrième distance estimée entre le capteur de distance (200) et l'objet (210), sur la base de la première distance estimée, de la deuxième distance estimée et de la troisième distance estimée, dans lequel le calcul de la quatrième distance estimée comprend la sélection d'une parmi la première distance estimée ou la deuxième distance estimée qui est plus proche de la troisième distance estimée en tant que quatrième distance estimée.

2. Procédé selon la revendication 1, dans lequel la première distance estimée et la deuxième distance estimée sont calculées à l'aide d'une triangulation.

3. Procédé selon une quelconque revendication précédente, dans lequel le fait d'amener (504) le système de projection de lumière à projeter le motif lumineux est réalisé simultanément au fait d'amener (512) le système de projection de lumière à émettre l'impulsion lumineuse.

4. Procédé selon une quelconque revendication précédente, dans lequel le fait d'amener (506) le système de réception de lumière à acquérir l'image du motif de projection est réalisé simultanément au fait d'amener (514) le système de réception de lumière à acquérir l'image de la portion de l'impulsion lumineuse.

5. Procédé selon une quelconque revendication précédente, dans lequel la pluralité de points lumineux et l'impulsion lumineuse comprennent une lumière présentant une longueur d'onde qui est invisible à l'œil humain.

6. Procédé selon une quelconque revendication précédente, dans lequel la pluralité de points lumineux et l'impulsion lumineuse comprennent de la lumière infrarouge.

7. Procédé selon une quelconque revendication précédente, dans lequel le motif lumineux comprend un motif prédéfini présentant des dimensions connues.

8. Support de stockage non transitoire lisible par machine (606) codé avec des instructions (605) pouvant être exécutées par le système de traitement (202) incluant au moins un processeur (602), dans lequel, lorsqu'elles sont exécutées par le système de traitement (202), les instructions (605) amènent le système de traitement (202) à réaliser des opérations (200), les opérations (200) comprenant :
le fait d'amener (504) un système de projection de lumière (204) d'un capteur de distance (200) à projeter un motif lumineux sur un objet (210), dans lequel le motif lumineux comprend une pluralité de points lumineux (212) qui forment collectivement le motif ;
le fait d'amener (506) un système de réception de lumière du capteur de distance (200) à acquérir une image du motif lumineux projeté sur l'objet (210) ;
la détection (508) d'une position d'image d'un premier point lumineux de la pluralité de points lumineux (212) sur un capteur d'imagerie (206) du système de réception de lumière ;
le calcul (510) d'une première distance estimée entre le capteur de distance (200) et l'objet (21) et d'une deuxième distance estimée entre le capteur de distance (200) et l'objet (210), dans lequel le calcul (510) comprend :
l'identification d'une première trajectoire (216) et d'une seconde trajectoire (216) qui se chevauchent dans un emplacement de la position d'image, dans lequel la première trajectoire (216) comprend une première plage de plage potentielle de positions d'image d'un point lumineux de la pluralité de points lumineux (212) appartenant à la première trajectoire (216), et la seconde trajectoire (216) comprend une seconde plage de positions d'image potentielles d'un point lumineux de la pluralité de points lumineux (212) appartenant à la seconde trajectoire (216) ;
le calcul de la première distance estimée sur la base d'une hypothèse selon laquelle le premier point lumineux appartient à la première trajectoire (216) ; et
le calcul de la deuxième distance estimée sur la base d'une hypothèse selon laquelle le premier point lumineux appartient à la seconde trajectoire (216) ;
le fait d'amener (512) le système de projection de lumière (202) du capteur de distance (200) à émettre une impulsion lumineuse vers l'objet (210) ;
le fait d'amener (514) le système de réception de lumière à acquérir une image d'une portion de l'impulsion lumineuse qui est réfléchie par l'objet (210) ;
le calcul (516) d'une troisième distance estimée entre le capteur de distance (200) et l'objet (210), sur la base d'un temps de vol de l'impulsion lumineuse ; et
le calcul (518) d'une quatrième distance estimée entre le capteur de distance (200) et l'objet (210), sur la base de la première distance estimée, de la deuxième distance estimée et de la troisième distance estimée, dans lequel le calcul de la quatrième distance estimée comprend la sélection d'une parmi la première distance estimée ou la deuxième distance estimée qui est plus proche de la troisième distance estimée en tant que quatrième distance estimée.

9. Support de stockage non transitoire lisible par machine selon la revendication 8, qui est en outre codé avec des instructions (605) pour réaliser le procédé selon l'une quelconque des revendications 2 à 7.

10. Appareil (600), comprenant :
un système de traitement (602) ; et
un support de stockage non transitoire lisible par machine (606) codé avec des instructions (605) pouvant être exécutées par le système de traitement (602), dans lequel, lorsqu'elles sont exécutées, les instructions (605) amènent le système de traitement (602) à réaliser des opérations (200), les opérations (200) comprenant :
le fait d'amener (504) un système de projection de lumière (204) d'un capteur de distance (200) à projeter un motif lumineux sur un objet (210), dans lequel le motif lumineux comprend une pluralité de points lumineux (212) qui forment collectivement le motif ;
le fait d'amener (506) un système de réception de lumière du capteur de distance (200) à acquérir une image du motif lumineux projeté sur l'objet (210) ;
la détection (508) d'une position d'image d'un premier point lumineux de la pluralité de points lumineux (212) sur un capteur d'imagerie (206) du système de réception de lumière ;
le calcul (510) d'une première distance estimée entre le capteur de distance (200) et l'objet (21) et d'une deuxième distance estimée entre le capteur de distance (200) et l'objet (210), dans lequel le calcul (510) comprend :
l'identification d'une première trajectoire (216) et d'une seconde trajectoire (216) qui se chevauchent dans un emplacement de la position d'image, dans lequel la première trajectoire (216) comprend une première plage de plage potentielle de positions d'image d'un point lumineux de la pluralité de points lumineux (212) appartenant à la première trajectoire (216), et la seconde trajectoire (216) comprend une seconde plage de positions d'image potentielles d'un point lumineux de la pluralité de points lumineux (212) appartenant à la seconde trajectoire (216) ;
le calcul de la première distance estimée sur la base d'une hypothèse selon laquelle le premier point lumineux appartient à la première trajectoire (216) ; et
le calcul de la deuxième distance estimée sur la base d'une hypothèse selon laquelle le premier point lumineux appartient à la seconde trajectoire (216) ;
le fait d'amener (512) le système de projection de lumière (202) du capteur de distance (200) à émettre une impulsion lumineuse vers l'objet (210) ;
le fait d'amener (514) le système de réception de lumière à acquérir une image d'une portion de l'impulsion lumineuse qui est réfléchie par l'objet (210) ;
le calcul (516) d'une troisième distance estimée entre le capteur de distance (200) et l'objet (210), sur la base d'un temps de vol de l'impulsion lumineuse ; et
le calcul (518) d'une quatrième distance estimée entre le capteur de distance (200) et l'objet (210), sur la base de la première distance estimée, de la deuxième distance estimée et de la troisième distance estimée, dans lequel le calcul de la quatrième distance estimée comprend la sélection d'une parmi la première distance estimée ou la deuxième distance estimée qui est plus proche de la troisième distance estimée en tant que quatrième distance estimée.
